# EUROPEAN PATENT APPLICATION

(11) **EP 4 819 059 A1**
(43) Date of publication of application: **07.10.2026**
(21) Application number: 25168388.4
(22) Date of filing: 03.04.2025
(51) Int. Cl.: G06V 10/147, G06V 20/52, G06V 10/774, G06V 40/10

(54) **HIERACICAL TRACKING OF LOWER BODY PARTS FOR ANTI TAILGATING**

(71) Applicant: dormakaba Deutschland GmbH, 58256 Ennepetal (DE)
(72) Inventor: FARESSE, Marc, 58256 Ennepetal (DE)
(74) Representative: Balder IP Law, S.L.

(57) **Abstract**

A computer-implemented method, comprising:
- applying, by an electronic circuit (5) communicatively connected to a detector (4), a detection process to detect reference body part(s) (R, R') of one or more individuals in a passageway (7), the detection process comprising:
a) setting a field of view (F) of the detector (4) to limit capture to lower body extremities - including feet - of individual(s) in the passageway (7);
b) capturing, by the detector (4), image data of one or more individuals (P, P') in the passageway (7);
c) processing, by an electronic circuit (5), the image data for detecting reference body part(s) (R, R');
d) if reference body part(s) (R, R') are not detectable by processing the image data, then adjusting the field of view (F) of the detector (4) to progressively capture higher and higher situated body parts, including lower legs, and if required, further upward along the body, and repeating steps b) to d) until reference body part(s) are detectable with the set degree of certainty or until a field of view (F) limit has been reached;

- detecting, by the electronic circuit (5), tailgating of individuals (P, P') passing through the passageway (7), by processing the image data and the detected reference body part(s).

## Description

### FIELD OF THE INVENTION

The present invention relates to a computer-implemented method, a device, and a computer program product, in particular for observing individuals in a passageway. The present invention further relates to a computer-implemented method, a system and a computer program product for observing individuals in a passageway and controlling access to an access-controlled area based on observing individuals in a passageway.

### BACKGROUND OF THE DISCLOSURE

In the field of access control, tailgating refers to a breach in physical security in which an unauthorized individual follows an authorized individual to enter an access-controlled area. Typically, individuals can enter the access-controlled area via one or more access gates, which allow passing of single individuals, usually upon validation of access information. In the case of tailgating the unauthorized individual follows the authorized individual in a relatively close distance through the access gate.

Current solutions to detect tailgating at access gates involve inaccurate or complex 3D imaging techniques. In addition, current approaches often have privacy issues, since personal data, such as visual data of the persons passing the access gates are collected as a byproduct in order to detect tailgating. In order to address such privacy issues, methods have been developed for detecting tailgating that rely on identifying and tracking individuals passing through a passageway, focusing on the lower body extremities as a reference, as disclosed for example in WO20212/45098 by Dormakaba Schweiz AG published in 09 December 2021. In order to avoid capturing personal data, such as facial features, detectors are arranged and oriented to capture only the feet or other lower extremities of the individuals.

However, in practice, the visibility of certain lower body parts can be obscured or unreliable. For example, an individual's feet may be hidden by a carried object, overlapping with another individual's feet, or simply not clearly visible due to the positioning or orientation of the detection system.

Approaches that rely heavily on specific reference points, such as feet, may sometimes produce inaccurate results if the primary reference is not clearly visible. This can lead to a loss in detection accuracy, especially in crowded or challenging environments, resulting in incorrect tailgating detections, increased false alerts, and potentially compromised security.

In a further related aspect, machine learning models, trained on labeled training data, have been employed for detecting tailgating from captured images. Such approaches are limited to conventional detector placements and orientations, since their training data is likewise restricted to these conventional arrangements. However, in order to avoid capturing personal data, such as facial features, the detector need to be arranged and oriented such that its detection zone/ field of view is confined to the lower body extremities of individuals passing through the passageway. Due to the relatively narrow geometry of such passageways, a wide-angle field of view is typically required to capture these lower body extremities from close proximity. As a result, the images acquired are recorded from uncommon angles and can be significantly distorted. Machine learning models trained with conventionally available datasets fail to accurately detect tailgating under these conditions.

While it is theoretically possible to correct the distorted and unusually oriented images in real-time - such as by applying computational transformations to adjust the geometry, perspective, and distortion of each captured image-this approach requires substantial computational power. Real-time correction would therefore necessitate either more powerful and costly hardware resources or would significantly slow down processing times, thereby rendering such real-time correction methods impractical for commercial applications.

### SUMMARY OF THE DISCLOSURE

It is an object of the present disclosure to provide a computer-implemented method, a device, a system and a computer program product for observing individuals in a passageway which do not have at least some of the disadvantages of the prior art. In particular, it is an object of this disclosure to enable reliable tailgating detection even when the visibility of certain lower body extremities is not possible.

According to the present disclosure, these objects are addressed by the features of the independent claims. In addition, further advantageous embodiments follow from the dependent claims and the description.

In particular, these objects are addressed by a computer-implemented method comprising applying a detection process to detect reference body part(s) of one or more individuals in a passageway and detecting tailgating of individuals passing through the passageway, by processing image data of one or more individuals in the passageway and the detected reference body part(s).

Depending on the particular use case, the method is performed periodically, at set intervals, e.g. with a set frequency of detection. Alternatively, or additionally, the method is triggered by a certain event, such as the detection of motion within the passageway.

The detection process to detect reference body part(s) of one or more individuals in a passageway is applied by an electronic circuit - communicatively connected to a detector.

In a first step a) of the detection process, a field of view of the detector is set to limit capture to lower body extremities - including feet - of individual(s) in the passageway.

Thereafter, in a further step b) of the detection process, image data of one or more individuals in the passageway is captured by the detector.

The image data is then processed, in a further step c) of the detection process, for detecting reference body part(s).

If reference body part(s) are not detectable by processing the image data, then in a further step d) of the detection process, the field of view of the detector is adjusted to progressively capture higher and higher situated body parts, including lower legs, and if required, further upward along the body.

According to embodiments, reference body part(s) are considered as detected if the detection certainty is equal to or greater than a set degree of certainty, e.g. as a probability percentage.

Steps b) to d) are repeated until reference body part(s) are detectable (respectively are detectible with the set degree of certainty). Alternatively repeating steps b) to d) is stopped if a field of view limit has been reached, such as when the field of view of the detector is such that it would capture the upper body, chest and/or back or even shoulders of individuals. In this manner, the privacy of individuals may be safeguarded - albeit to a lesser degree - even in the presence of obstruction of lower bodily extremities.

Following the detection process of reference body part(s), tailgating of individuals passing through the passageway is detected by the electronic circuit by processing the image data and the detected reference body part(s).

In summary, reliable tailgating detection is enabled according to the present disclosure, even when the visibility of certain lower body extremities is not possible, by adopting a hierarchical cascading approach. Instead of relying solely on the visibility of the feet to identify and count individuals, the method adaptively selects higher body parts if feet as reference body parts are not visible. If feet are not detected or are obscured, the method transitions to detecting the lower legs, and if necessary, continues upward until suitable reference points are found. This hierarchical strategy ensures that tailgating detection remains robust under various conditions, maintaining effective monitoring even when the initially targeted lower body extremities are not clearly visible while at the same time safeguarding the privacy of individuals as much as possible.

According to embodiments, adjusting a field of view of the detector comprises mechanical field of view adjustment, such as adjusting a physical positioning and/or an angle and/or orientation of the detector relative to the passageway. Alternatively, or additionally adjusting a field of view of the detector comprises a virtual field of view adjustment such as by selectively disabling or enabling pixel regions within the detector to alter an effective sensing area without physical movement of the detector. As compared to a mechanical field of view adjustment, a virtual field of view adjustment may be advantageous as it allows adjusting a field of view of the detector without having to alter physical positioning and/or an angle and/or orientation of the detector of the detector.

According to embodiments, an alarm signal is generated if tailgating of individuals passing through the passageway is detected. Alternatively, or additionally, an alarm signal is generated if the field of view limit has been reached without reference body part(s) being detectable with a set degree of certainty.

Analogously to embodiments of the method, the above-mentioned objects are addressed by a device for observing individuals in a passageway, comprising: a detector with an adjustable field of view, arranged to capture image data of one or more individuals in the passageway; and an electronic circuit communicatively connected to the detector, the device being configured to carry out the method of observing individuals in a passageway according to one of the embodiments disclosed herein.

Analogously to embodiments of the method, the above-mentioned objects are addressed by a computer program product comprising computer-executable instructions, which, when executed by an electronic circuit of a device for observing individuals in a passageway, cause the device to carry out the method of observing individuals in a passageway according to one of the embodiments disclosed herein.

Alternatively or additionally, it is an object of the present disclosure to provide a computer-implemented method, a device, a system and a computer program product enabling reliable tailgating detection based on images of lower body extremities captured at uncommon angles with a wide-angle field of view, without relying on impractical, computationally expensive real-time image corrections.

This alternative, or additional objective is addressed according to embodiments of the present disclosure by a computer-implemented method, comprising: applying a detection process to detect reference body part(s) of one or more individuals in a passageway and detecting tailgating of individuals passing through the passageway, by processing image data of one or more individuals in the passageway and the detected reference body part(s).

The detection process to detect reference body part(s) of one or more individuals in a passageway is applied by an electronic circuit - communicatively connected to a detector. In a fist step a) of the detection process, a field of view of the detector is set to limit capture to lower body extremities - including feet - of individual(s) in the passageway. Thereafter, in a further step b) of the detection process, image data of one or more individuals in the passageway is captured by the detector. The image data is then processed, in a further step c) of the detection process, for detecting reference body part(s).

In order to enable reliable tailgating detection based on images of lower body extremities captured at uncommon angles with a wide-angle field of view, without relying on impractical, computationally expensive real-time image corrections, processing the image data for detecting reference body part(s) makes use of a computational model trained specifically for processing image data characterized by a placement, orientation, and/or field of view corresponding to a placement, an orientation, and/or the field of view of the detector. According tot embodiments, the computational model comprises but is not limited to: artificial neural networks, convolutional neural networks (CNNs), recurrent neural networks (RNNs), transformer-based models, decision tree-based models, support vector machines (SVMs), statistical image processing techniques, and/or a combination thereof.

According to embodiments, the computational model used for processing the image data for detecting reference body part(s), is characterized by having been trained by:
i) Obtaining training datasets comprising training image data representing reference body parts. In particular, the training datasets comprising images or sequences of images depicting lower body extremities of both tailgating and non-tailgating individuals;
ii) Estimating a placement, orientation, and/or field of view corresponding to said training image data of the training datasets;
iii) Transforming the training image data (in the following transformed image data) of the training datasets from the estimated placement, orientation, and/or field of view into transformed training image data corresponding to physical placement, orientation, and/or field of view of the detector , comprising performance of coordinate transformation(s) and/or image distortion(s); and
iv) Training the computational model using the transformed image data for detection of reference body part(s) from image data captured from placement, orientation, and/or the field of view of the detector. In particular, the computational model is trained to detect tailgating from images and/or sequences of images captured by a detector arranged and oriented to avoid capturing personal data, i.e. using images from unusual angles and potentially distorted.

According to embodiments, the computer-implemented method comprises a preparatory step of training a computational model to be used for processing the image data for detecting reference body part(s) according to the steps i) to iv) described above.

According to embodiments, a computational model is selected which has been trained specifically for processing image data characterized by a placement, orientation, and/or field of view corresponding to a placement, an orientation, and/or the field of view of the detector upon adjustment of the field of view of the detector.

It is an additional objective of further embodiments to provide a computer-implemented method, a system, and a computer program product for controlling access to an access-controlled area - in addition to observing individuals in a passageway.

According to embodiments, this further object is addressed in that the method further comprising controlling, by the electronic circuit, a barrier associated with the passageway, to allow or restrict access to an access-controlled area based on the detection of tailgating of individuals passing through the passageway.

According to embodiments, the method further comprises performing an authentication and authorization process with respect to the individual(s) in the passageway and controlling the barrier to allow or restrict access to the access-controlled area further based on the authentication and authorization process. In particular, the authentication and authorization process comprises:
- receiving authentication data from an authentication device of the individual(s) in the passageway using a transceiver communicatively connected to the electronic circuit;
- verifying the authentication data in order to determine whether the authentication device is authorized access into the secure control area;
- allowing entry to the access-controlled area using the barrier if the authentication device is authorized; and
- denying entry to the access-controlled area using the barrier if the authentication device is not authorized.

Analogously to embodiments of the method comprising controlling access to an access-controlled area, the above-mentioned additional objects are addressed by a system comprising a device for observing individuals in a passageway and a barrier for allowing or restricting access to an access-controlled area from a passageway, the system being configured to carry out the method of controlling access to an access-controlled area according to one of the embodiments disclosed herein.

Analogously to embodiments of the method comprising controlling access to an access-controlled area, the above-mentioned additional objects are addressed by a computer program product comprising computer-executable instructions, which, when executed by an electronic circuit of a device of a system for controlling access to an access-controlled area, cause the system to carry out the method of controlling access to an access-controlled area according to one of the embodiments disclosed herein.

In order to ensure that authentication is carried out with an authentication device in possession of an individual standing before the barrier and not someone else further away, according to embodiments, the authentication and authorization process further comprises:
- executing ultra-wideband transmissions with the authentication device(s) using the one or more transceiver(s) comprised by or communicatively connected to the access control device;
- detecting, by the electronic circuit, a location of the authentication device(s) relative to the barrier by processing properties of the ultra-wideband transmissions;
- controlling the barrier to allow or restrict access to the access-controlled area further based on the location of the authentication device(s) relative to the barrier.

According to embodiments, entry to the access-controlled area is allowed using the barrier if the authentication device is authorized, the authentication device is detected within a pre-defined proximity range of the barrier 3 and no tailgating has been detected; whereby entry to the access-controlled area is denied using the barrier if the authentication device is not authorized and/or if the authentication device is detected outside the pre-defined proximity range of the barrier 3 and/or tailgating has been detected.

Correspondingly, the system further comprising one or more transceivers communicatively connected to the electronic circuit and configured for executing ultra-wideband transmissions.

The authentication and authorization process, in particular the authentication and authorization process based on localization using ultra-wideband transmissions may implemented as described in WO2022/122728A1 published on 16 June 2022, WO2023/073144A1 published on 04 May 2023 or WO2023/174850A1 published on 21 September 2023, by Dormakaba Schweiz AG.

### BRIEF DESCRIPTION OF THE DRAWINGS

The present disclosure will be explained in more detail, by way of example, with reference to the drawings in which:
- Figure 1: shows a highly schematic perspective view of a system for controlling access to an access-controlled area,
- Figure 2A: shows a highly schematic perspective view of a system for controlling access to an access-controlled area, an individual approaching a barrier, the feet of the individual being visible to a detector;
- Figure 2B: shows a highly schematic perspective view of a system for controlling access to an access-controlled area, an individual approaching a barrier, the feet of the individual being obscured by a piece of luggage but his lower legs visible to the detector;
- Figure 2C: shows a highly schematic perspective view of a system for controlling access to an access-controlled area, an individual approaching a barrier, the feet and lower legs of the individual being obscured by a piece of luggage but his upper legs and hip area visible to the detector;
- Figure 2D: shows a highly schematic perspective view of a system for controlling access to an access-controlled area, an individual approaching a barrier and a second individual tailgating, the feet of both individuals being obscured by a piece of luggage but their lower legs visible to the detector enabling detection of tailgating;
- Figure 2E: shows a highly schematic perspective view of a system for controlling access to an access-controlled area, an individual approaching a barrier, the feet of the individual being obscured by a piece of luggage but his lower legs visible to the detector, the individual performing an authentication and authorization process using a UWB-enabled authentication device(s);
- Figure 3: shows a block diagram illustrating highly schematically a system for controlling access to an access-controlled area;
- Figure 4: shows a flow diagram illustrating an exemplary sequence of steps of an embodiment of a method for observing individuals in a passageway and controlling access to an access-controlled area; and
- Figure 5: shows a flow diagram illustrating an exemplary sequence of steps of a further embodiment of a method for observing individuals in a passageway controlling access to an access-controlled area.

### DETAILED DESCRIPTION OF EMBODIMENTS

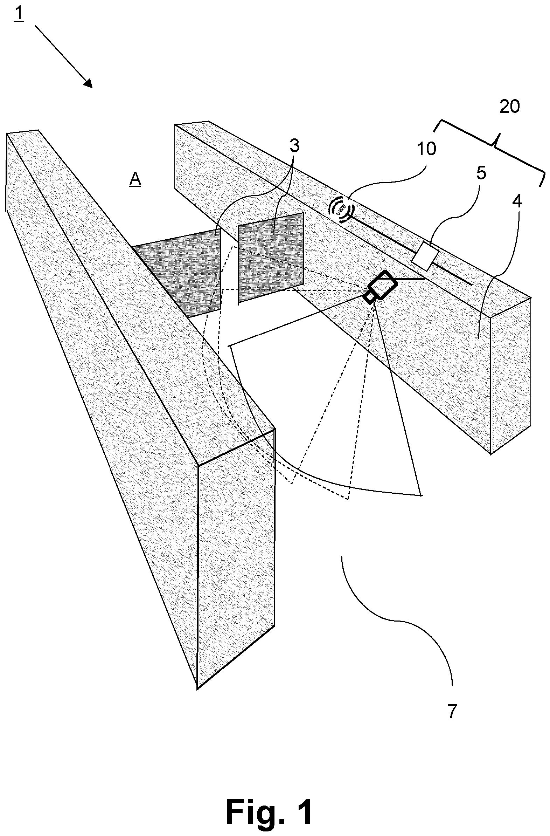

Figure 1 shows a highly schematic perspective view of a system 1 for controlling access to an access-controlled area A through a passageway 7. The passageway 7 may not necessarily be a structural element of the system 1, rather a gap defined by sidewalls or other structural or constructional elements. As illustrated, a barrier 3 is arranged in a passageway 7 for allowing or restricting access to an access-controlled area A. The barrier 3 may take the form of a door, in particular a sliding door, a turnstile, or other forms for delimiting a secure area A from the passageway 7.

The system 1 further comprises at least one detector 4, arranged to capture image data of one or more individuals P, P' in the passageway 7. In the embodiment shown the detector 4 comprises a camera. The detector 4 has an adjustable field of view allowing:
- setting the field of view F to limit capture to lower body extremities - including feet; and
- adjusting the field of view F of the detector 4 to progressively capture higher and higher situated body parts, including lower legs, and if required, further upward along the body.

WO20212/45098 by Dormakaba Schweiz AG published in 09 December 2021 is hereby referred to with respect to further specific implementations of the detector's arrangement in a passageway.

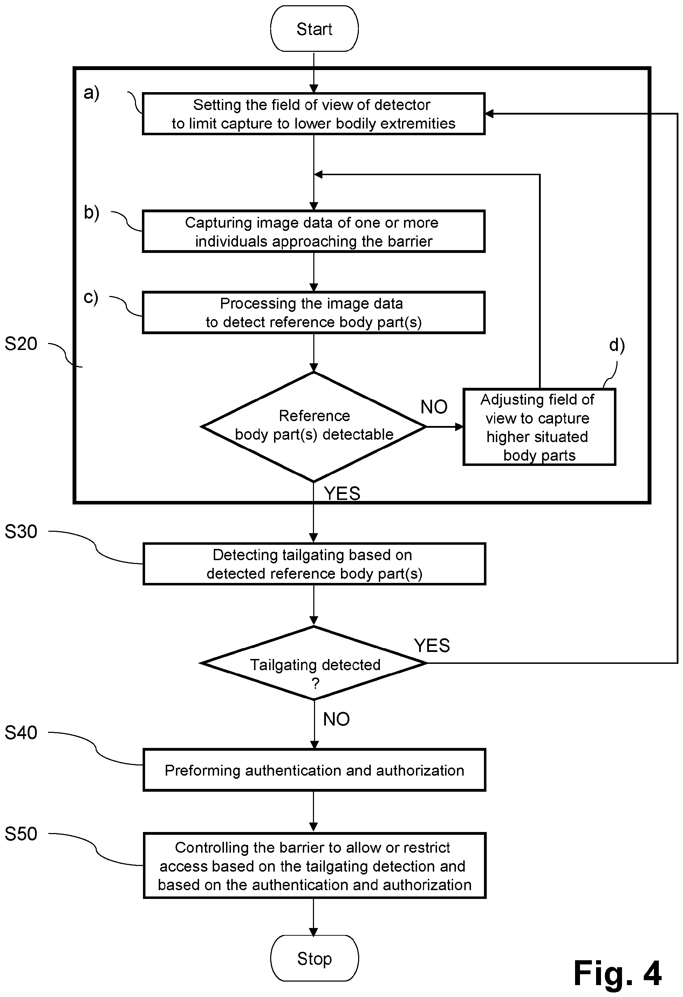

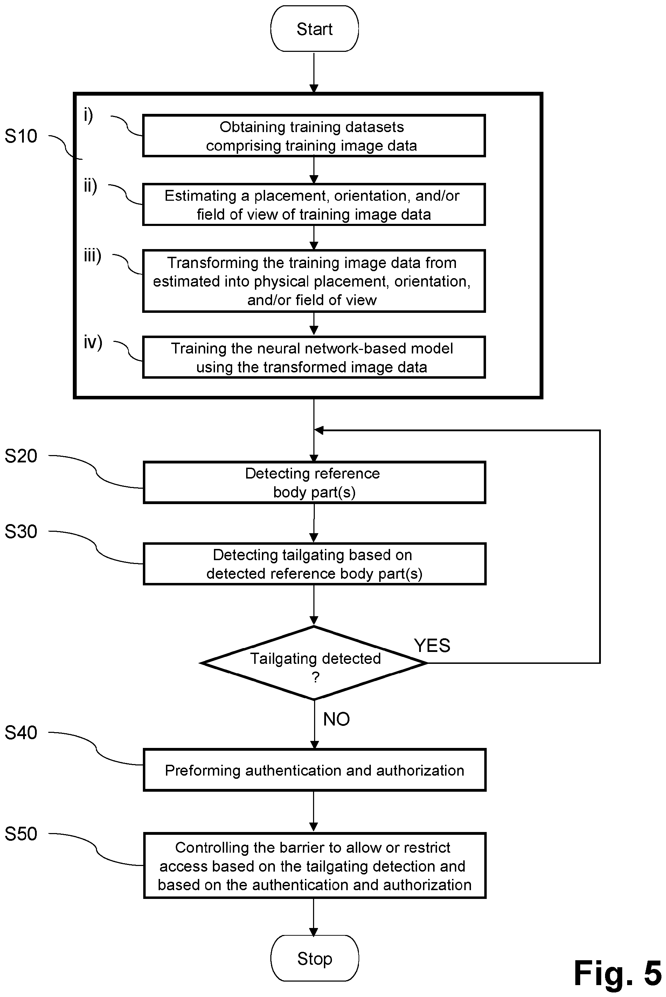

The access gate 1 further comprises an electronic circuit 5 communicatively connected to the detector 4. According to embodiments not illustrated, the electronic circuit 5, while communicatively connected to the detector 4, may be located remotely, such as in a cloud-based server infrastructure. The device 20, in particular the electronic circuit 5 thereof, is configured to carry out the method of observing individuals P, P' in the passageway and for controlling access to the access-controlled area as shall be described with reference to the figures 4 and 5.

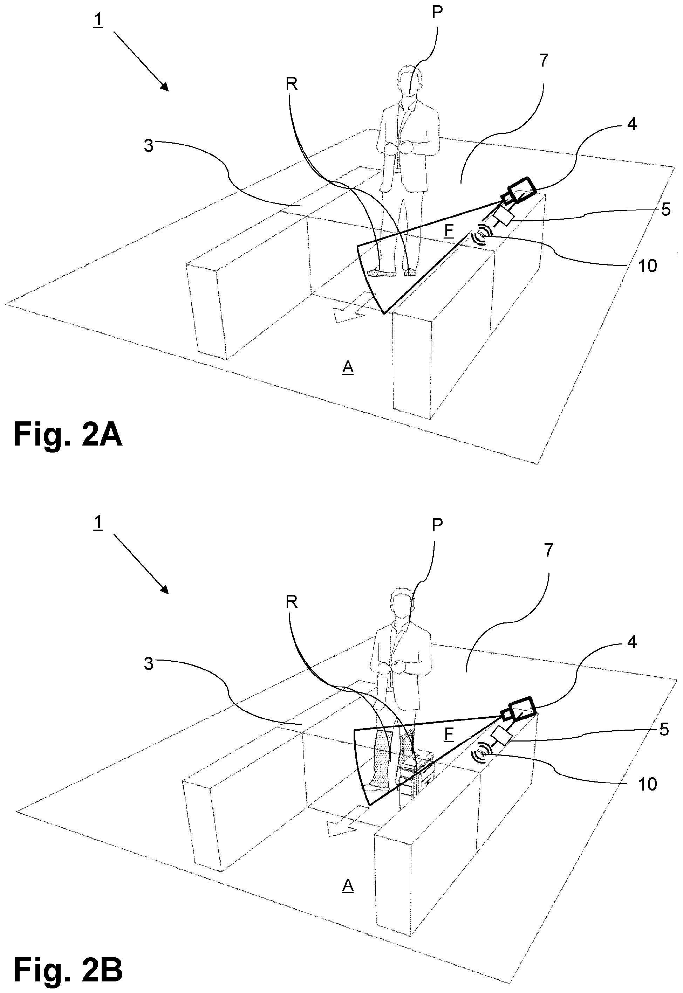

Figure 2A shows a highly schematic perspective view of a system 1 for controlling access to an access-controlled area A, an individual P approaching the barrier 3, the feet of the individual P being visible to the detector 4. In this case, reference body part(s) R are detected already using the initial setting of the field of view F of the detector 4 limited capture to lower body extremities - including feet - of individual(s) in the passageway 7.

Figure 2B shows a highly schematic perspective view of the system 1 for controlling access to the access-controlled area A, an individual P approaching the barrier 3. In this case, since the feet of the individual being obscured by a piece of luggage, reference body part(s) R are not detectable by processing the image data using the initial setting of the field of view F of the detector 4 limited capture to lower body extremities - including feet - of individual(s) in the passageway 7. Therefore, the field of view F of the detector 4 is adjusted to capture lower legs. Since, lower legs of the individual P are visible to the detector 4, reference body part(s) R are detected using the field of view F of the detector 4 adjusted to capture lower legs. The detection of tailgating is then performed using lower legs as reference body parts R.

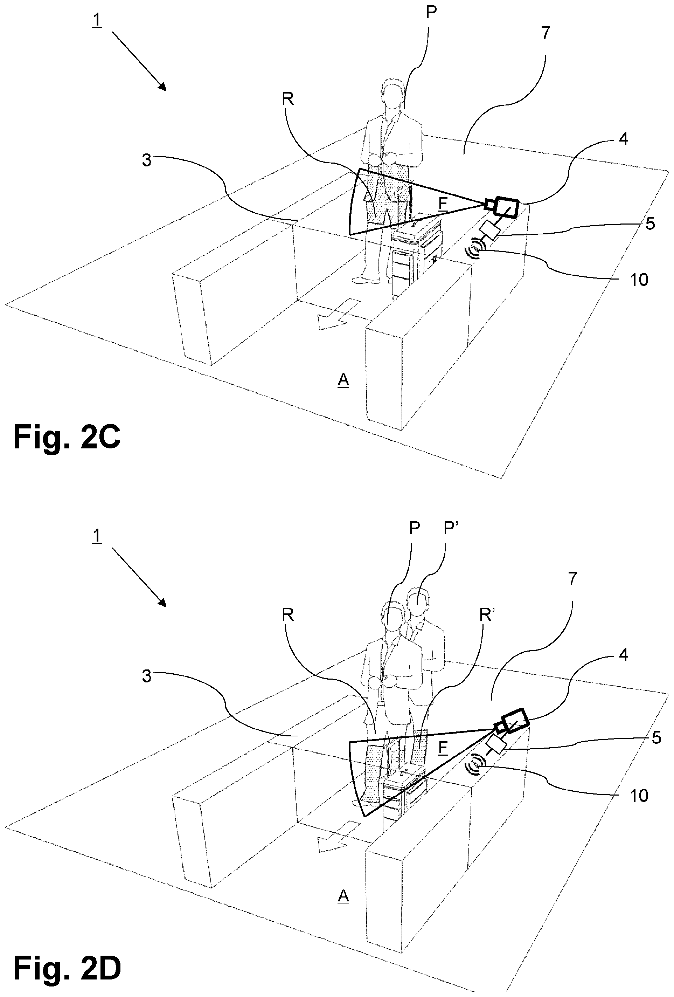

Figure 2C shows a highly schematic perspective view of the system 1 for controlling access to the access-controlled area A, an individual P approaching the barrier 3. In this case, since the feet of the individual being obscured by a piece of luggage, reference body part(s) R are not detectable by processing the image data using the initial setting of the field of view F of the detector 4 limited capture to lower body extremities - including feet - of individual(s) in the passageway 7. Therefore, the field of view F of the detector 4 is adjusted to capture lower legs. Since, lower legs of the individual P are also obscured, the field of view F of the detector 4 is adjusted again to capture higher situated body parts further upward along the body, in this case including the upper legs and hip area. Since the hips of the individual P are visible to the detector 4, reference body part(s) R are detected using the field of view F of the detector 4 adjusted to capture the upper legs and hip area. The detection of tailgating is then performed using the upper legs and hip area as reference body parts.

Figure 2D shows a highly schematic perspective view of the system 1 for controlling access to the access-controlled area A, an individual P approaching the barrier 3 and a second individual P' tailgating. Since the feet of the individuals P, P' are obscured by a piece of luggage, reference body part(s) R of the individual P respectively reference body part(s) R' of the second individual P' are not detectable by processing the image data using the initial setting of the field of view F of the detector 4 limited capture to lower body extremities - including feet - of individual(s) in the passageway 7. Therefore, the field of view F of the detector 4 is adjusted to capture lower legs. Since, lower legs of the individual P respectively the second individual P' are visible to the detector 4, reference body part(s) R, R' are detected using the field of view F of the detector 4 adjusted to capture lower legs. The detection of tailgating is then performed using lower legs as reference body part(s) R of the individual P respectively reference body part(s) R' of the second individual P'.

It shall be understood that according to situations, body parts detected as reference body parts must not be the same for all individuals. For example, it is possible that feet of an individual are detectable as reference body part(s) while only the upper legs of a second individual are detectable as reference body part(s). In this case, detection of tailgating is then performed using feet as reference body part(s) of the individual P and lower legs as reference body part(s) R' of the second individual P'.

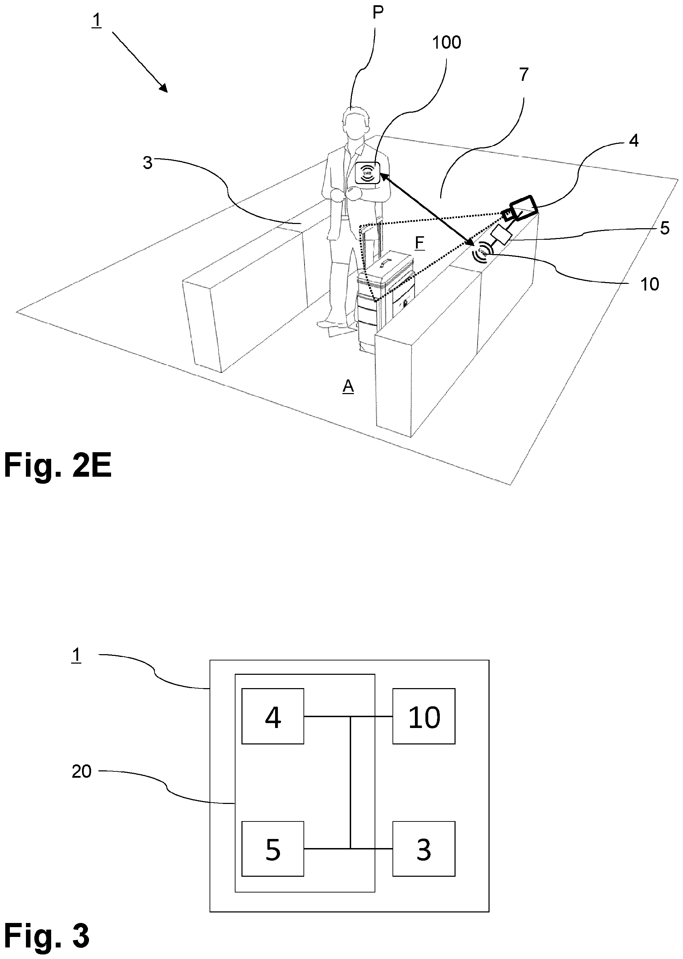

Figure 2E shows a highly schematic perspective view of a further embodiment of a system 1 for controlling access to an access-controlled area A, the system 1 further comprising one or more transceivers 10 communicatively connected to the electronic circuit 5 and configured for executing ultra-wideband transmissions. The individual P approaching the barrier 3 performs an authentication and authorization process using a UWB-enabled authentication device(s) 100.

Figure 3 shows a block diagram illustrating highly schematically a system 1 for controlling access to an access-controlled area A. As shown, the system comprises a device 20 with a detector 4 with an adjustable field of view, arranged to capture image data of one or more individuals P, P' in the passageway 7, and an electronic circuit 5 communicatively connected to the detector 4. The system 1 further comprises a barrier 3 for allowing or restricting access to an access-controlled area A from a passageway 7. In order to enable an authentication and authorization process comprising detection of authentication device(s), the system 1 further comprises one or more transceivers 10 communicatively connected to the electronic circuit 5.

Figure 4 shows a flow diagram illustrating an exemplary sequence of steps of an embodiment of a method for observing individuals P, P' in a passageway and controlling access to an access-controlled area.

In a detection process **S20** reference body part(s) R, R' of one or more individuals P, P' in a passageway 7 are detected.

In a first step **a)** of the detection process S20, a field of view F of the detector 4 is set to limit capture to lower body extremities - including feet - of individual(s) in the passageway 7.

Thereafter, in a further step **b)** of the detection process S20, image data of one or more individuals P, P' in the passageway 7 is captured by the detector 4.

The image data is then processed, in a further step **c)** of the detection process S20, for detecting reference body part(s) R, R'.

If reference body part(s) R, R' are not detectable by processing the image data, then in a further step **d)** of the detection process S20, the field of view F of the detector 4 is adjusted to progressively capture higher and higher situated body parts, including lower legs, and if required, further upward along the body.

According to embodiments, reference body part(s) R, R' are considered as detected if the detection certainty is equal to or greater than a set degree of certainty, e.g. as a probability percentage.

Steps b) to d) are repeated until reference body part(s) are detectable (respectively are de-tectible with the set degree of certainty). Alternatively repeating steps b) to d) is stopped if a field of view F limit has been reached, such as when the field of view F of the detector 4 is such that it would capture the upper body, chest and/or back or even shoulders of individuals P, P'. In this manner, the privacy of individuals P, P' may be safeguarded - albeit to a lesser degree - even in the presence of obstruction of lower bodily extremities.

Following the detection process S20 of reference body part(s) R, R', in a step **S30** tailgating of individuals P, P' passing through the passageway 7 is detected by the electronic circuit 5 by processing the image data and the detected reference body part(s).

Thereafter, if no tailgating has been detected, in a step **S40,** an authentication and authorization process is performed with respect to the individual(s) in the passageway 7 and controlling the barrier 3 to allow or restrict access to the access-controlled area A further based on the authentication and authorization process. In particular, the authentication and authorization process comprises:
- executing ultra-wideband transmissions with the authentication device(s) 100 using the one or more transceiver(s) 10;
- detecting, by the electronic circuit 5, a location of the authentication device(s) 100 relative to the barrier 3 by processing properties of the ultra-wideband transmissions;
- receiving authentication data from an authentication device 100 of the individual(s) in the passageway 7 using a transceiver 10 communicatively connected to the electronic circuit 5;
- verifying the authentication data in order to determine whether the authentication device 100 is authorized access into the secure control area A.

Thereafter, in a step **S50,** the barrier 3 is controlled by the electronic circuit 5 to allow or restrict access to the access-controlled area A based on the detection of tailgating of individuals P, P' and further based on the authentication and authorization process. IN particular, step S50 comprises:
- controlling the barrier 3 allow entry to the access-controlled area A using the barrier 3 if the authentication device 100 is authorized, the authentication device 100 is detected within a pre-defined proximity range of the barrier 3 and if no tailgating has been detected; and
- controlling the barrier 3 to deny entry to the access-controlled area A using the barrier 3 if the authentication device 100 is not authorized and/or if the authentication device 100 is detected outside the pre-defined proximity range of the barrier 3 and/or if tailgating has been detected.

Figure 5 shows a flow diagram illustrating an exemplary sequence of steps of a further embodiment of a method for observing individuals P, P' in a passageway and controlling access to an access-controlled area A, especially aimed at reliable tailgating detection based on images of lower body extremities captured at uncommon angles with a wide-angle field of view.

As illustrated, a preparatory training process **S10** comprises:
i) Obtaining training datasets comprising training image data representing reference body parts. In particular, the training datasets comprising images or sequences of images depicting lower body extremities of both tailgating and non-tailgating individuals P, P';
ii) Estimating a placement, orientation, and/or field of view corresponding to said training image data of the training datasets;
iii) Transforming the training image data (in the following transformed image data) of the training datasets from the estimated placement, orientation, and/or field of view into transformed training image data corresponding to physical placement, orientation, and/or field of view of the detector 4, comprising performance of coordinate transformation(s) and/or image distortion(s); and
iv) Training the computational model using the transformed image data for detection of reference body part(s) and/or for detection of tailgating from image data captured from physical placement, orientation, and/or the field of view of the detector 4.

In particular, the computational model is trained to detect reference body part(s) and/or to detect tailgating from images and/or sequences of images captured by a detector arranged and oriented to avoid capturing personal data, i.e. using images from unusual angles and potentially distorted.

The computational model trained in step S10 is then used in step S20 for the detection of reference body part(s) and/or in step S30 for detection of tailgating from image data captured by the detector 4.

### REFERENCE LIST

| | |
|---|---|
| System | 1 |
| Barrier | 3 |
| detector | 4 |
| field of view (of the detector) | F |
| electronic circuit | 5 |
| Passageway | 7 |
| Transceiver | 10 |
| Device (for observing individuals) | 20 |
| Secure control area | A |
| Reference body part(s) | R, R' |
| Individual | P |

## Claims

1. A computer-implemented method, comprising:
- applying, by an electronic circuit (5) communicatively connected to a detector (4), a detection process to detect reference body part(s) (R, R') of one or more individuals in a passageway (7), the detection process comprising:
a) setting a field of view (F) of the detector (4) to limit capture to lower body extremities - including feet - of individual(s) in the passageway (7);
b) capturing, by the detector (4), image data of one or more individuals (P, P') in the passageway (7);
c) processing, by an electronic circuit (5), the image data for detecting reference body part(s) (R, R');
d) if reference body part(s) (R, R') are not detectable by processing the image data, then adjusting the field of view (F) of the detector (4) to progressively capture higher and higher situated body parts, including lower legs, and if required, further upward along the body, and repeating steps b) to d) until reference body part(s) are detectable with the set degree of certainty or until a field of view (F) limit has been reached;
- detecting, by the electronic circuit (5), tailgating of individuals (P, P') passing through the passageway (7), by processing the image data and the detected reference body part(s).

2. The computer-implemented method according to claim 1, wherein adjusting a field of view (F) of the detector (4) comprises mechanical field of view adjustment, such as adjusting a physical positioning and/or an angle and/or orientation of the detector (4) relative to the passageway (7).

3. The computer-implemented method according to claim 1 or 2, wherein adjusting a field of view (F) of the detector (4) comprises a virtual field of view adjustment by adjusting processing parameters within a sensor range of the detector (4), such by selectively disabling or enabling pixel regions within the detector (4) to alter an effective sensing area without physical movement of the detector (4).

4. The computer-implemented method according to one of the claims 1 to 3, further comprising generating an alarm signal if detecting tailgating of individuals (P, P') passing through the passageway (7) and/or if the field of view (F) limit has been reached without reference body part(s) being detectable with a set degree of certainty.

5. The computer-implemented method according to one of the claims 1 to 4, further comprising, using - for processing the image data for detecting reference body part(s) (R, R') and/or for detecting tailgating of individuals (P, P') - a computational model trained specifically for processing image data **characterized by** a placement, orientation, and/or field of view corresponding to a placement, an orientation, and/or the field of view of the detector (4).

6. The computer-implemented method according to claim 5, wherein the computational model used for processing the image data for detecting reference body part(s) (R, R'), is **characterized by** having been trained by:
- obtaining training datasets comprising training image data representing reference body parts;
- estimating a placement, orientation, and/or field of view corresponding to said training image data of the training datasets;
- transforming the training image data of the training datasets from corresponding to the estimated placement, orientation, and/or field of view into transformed training image data corresponding to physical placement, orientation, and/or field of view of the detector (4), comprising performance of coordinate transformation(s) and/or image distortion(s);
- training the computational model using the transformed image data for detection of reference body part(s) from image data captured from placement, orientation, and/or the field of view of the detector (4).

7. The computer-implemented method according to claim 5 or 6, further comprising selecting a computational model trained specifically for processing image data **characterized by** a placement, orientation, and/or field of view corresponding to a placement, an orientation, and/or the field of view of the detector (4) upon adjustment of the field of view (F) of the detector (4).

8. The computer-implemented method according to one of the claims 1 to 7, further comprising controlling, by the electronic circuit (5), a barrier (3) associated with the passageway (7), to allow or restrict access to an access-controlled area (A) based on the detection of tailgating of individuals (P, P') passing through the passageway (7).

9. The computer-implemented method according to claim 8, further comprising performing an authentication and authorization process with respect to the individual(s) in the passageway (7) and controlling the barrier (3) to allow or restrict access to the access-controlled area (A) further based on the authentication and authorization process.

10. The computer-implemented method according to claim 9, wherein the authentication and authorization process comprises:
- receiving authentication data from an authentication device (100) of the individual(s) in the passageway (7) using a transceiver (10) communicatively connected to the electronic circuit (5);
- verifying the authentication data in order to determine whether the authentication device (100) is authorized access into the secure control area (A);
- allowing entry to the access-controlled area (A) using the barrier (3) if the authentication device (100) is authorized; and
- denying entry to the access-controlled area (A) using the barrier (3) if the authentication device (100) is not authorized.

11. The computer-implemented method according to claim 10, wherein the authentication and authorization process further comprises:
- executing ultra-wideband transmissions with the authentication device(s) (100) using the one or more transceiver(s) (10) comprised by or communicatively connected to the access control device (10);
- detecting, by the electronic circuit (5), a location of the authentication device(s) (100) relative to the barrier (3) by processing properties of the ultra-wideband transmissions;
- controlling the barrier (3) to allow or restrict access to the access-controlled area (A) further based on the location of the authentication device(s) (100) relative to the barrier (3).

12. A device (20) for observing individuals (P, P') in a passageway (7), comprising:
- a detector (4) with an adjustable field of view, arranged to capture image data of one or more individuals (P, P') in the passageway (7);
- an electronic circuit (5) communicatively connected to the detector (4),
the device (20) being configured to carry out the method according to one of the claims 1 to 7.

13. A system (1) for controlling access to an access-controlled area (A), the system (1) comprising a device (20) according to claim 12 and a barrier (3) for allowing or restricting access to an access-controlled area (A) from a passageway (7), the system (1) being configured to carry out the method according to one of the claims 8 to 9.

14. The system (1) according to claim 13, further comprising one or more transceivers (10) communicatively connected to the electronic circuit (5), the system (1) being configured to carry out the method according to claim 10 or 11.

15. A computer program product comprising computer-executable instructions, which, when executed by an electronic circuit (5) of a device (20) according to claim 12, cause the device (20) to carry out the method according to one of the claims 1 to 7.

16. A computer program product comprising computer-executable instructions, which, when executed by an electronic circuit (5) of a device (20) of a system (1) according to claim 13, cause the system (1) to carry out the method according to one of the claims 8 or 9.

17. A computer program product comprising computer-executable instructions, which, when executed by an electronic circuit (5) of a device (20) of a system (1) according to claim 14, cause the system (1) to carry out the method according to one of the claims 10 or 11.
